# EUROPÄISCHE PATENTSCHRIFT

(11) **EP 0 591 573 B1**
(45) Veröffentlichungstag und Bekanntmachung des Hinweises auf die Patenterteilung: **14.02.1996**
(21) Anmeldenummer: 92119806.5
(22) Anmeldetag: 20.11.1992
(51) Int. Cl.: B01D 45/18, B01D 45/08, B05B 15/12

(54) **Vorfilter für Spritznebel-Absauganlagen**
Prefilter for paintmist exhaust systems
Dispositif de préfiltration pour systèmes d'évacuation d'un brouillard de peinture

(30) Priorität: 09.10.1992 DE 4200298
(43) Veröffentlichungstag der Anmeldung: 13.04.1994
(73) Patentinhaber: Schaber, Gerhard, D-72202 Nagold (DE)
(72) Erfinder: Schaber, Gerhard, D-72202 Nagold (DE)
(74) Vertreter: Otte, Peter, Dipl.-Ing.

(56) Entgegenhaltungen:
- EP-A- 0 081 166
- EP-A- 0 160 810
- DE-B- 1 150 603
- US-A- 1 632 813
- US-A- 2 347 728

## Beschreibung

Die Erfindung betrifft ein Vorfilter 10 für Spritznebel-Absauganlagen mit Prallflächen nach dem Oberbegriff des Patentanspruchs 1, das aus der DE-B-1 150 603 bekannt ist.

Dabei wird ein solches Vorfilter von der spritznebelbehafteten Luft durchströmt, üblicherweise unter der Wirkung entsprechender Ventilatoren oder Absaugeinrichtungen der eigentlichen Spritznebel-Absauganlage. Solche Absauggeräte zum Absaugen verunreinigter Luft sind in vielfältiger Form bekannt; beispielsweise umfaßt ein bekanntes Absauggerät (DE-A-31 26 690) eine Saugeinrichtung innerhalb eines Gehäuses, welches zum Absaugen der verunreinigten Luft wenigstens an einer Seite eine Ansaugfläche hat, vor der unter Bildung von randseitigen Luftspalten eine geringfügig größer als die Ansaugfläche ausgebildete Abdeckhaube angeordnet ist und die Gesamtdurchtrittsfläche durch die Luftspalte wesentlich kleiner ist als die Ansaugfläche.

Zur Farbnebelbeseitigung ist es auch bekannt, eine mobile Spritzkabine aus miteinander verbundenen und durch lösbare Strebenverbindungen feststellbaren Teilen zu verwenden, so daß eine solche Spritzkabine sich ohne größere Umbauarbeiten aus der Gebrauchsstellung in eine flache Transportstellung überführen läßt. Diese bekannte mobile Spritzkabine weist mittig der Rückwand eine zentrale Belüftungsöffnung auf, die von einem ringförmigen, Luftströmungen radial führenden Filterkörper abgedeckt ist. Damit auch bei größeren, in der Spritzkabine verarbeiteten Teilen die in dieser erzeugten und abgefangenen Dämpfe von den Absaugmitteln erfaßt werden können, befindet sich vor dem Filter noch eine prallwand, durch welche die abgefangenen Dämpfe und Farbnebel gegen die Kabinenwände und den Boden abgelenkt werden können - insofern dient diese Prallwand nicht der Vorreinigung eines Farbspritznebels, sondern soll die Saugwirkung der zentralen Belüftungsöffnung umlenken und führen.

Bekannte, einer Vorreinigung der von Spritznebel-Absauganlagen angesaugten, farbpartikelbelasteten Luft dienende Prallflächen können üblicherweise so ausgebildet sein, daß sie in Gestellform vor die Absauganlagen positioniert werden, so daß die von diesen angesaugte Luft notwendigerweise auch die von diesen Vorfiltern zur Verfügung gestellten Prallwände passieren muß.

Im einfachsten Fall kann ein solches Vorfilter aus gegeneinandergestellten und auf diese Weise eine Art Labyrinthdichtung bildenden Halbschalenflächen bestehen, mit beliebigen Abmessungen in der Höhe und Breite, wobei die Halbschalenflächen in der Grundform U-förmig ausgebildet sind, so daß passierende Luft durch Zwischenräume einer im Sinne der Strömungsrichtung vorderen Prallteilwand auf U-förmigen Halbschalenflächen der hinteren Prallteilwand auftrifft, dort vollständig umgelenkt wird, wieder zurück zu den gegenüberliegenden U-förmigen Halbschalenflächen der vorderen Prallteilwand strömt, diese nunmehr von innen berührt und erst dann, nach erneuter vollständiger Richtungsumkehr durch Zwischenräume der hinteren Prallteilwand das Vorfilter in Richtung auf die Spritznebel-Absauganlage verläßt.

Daher lagern sich hauptsächlich an den inneren U-förmigen Flächen der beiden Prallteilwände des Vorfilters Verunreinigungen, Farbreste, Farbverkrustungen, Ablagerungen u.dgl. an und machen eine gelegentliche Reinigung des Vorfilters schon deshalb notwendig, damit die Luftumlenkungsführungen nicht verstopfen. Bis heute wird hierzu so vorgegangen, daß nach Abnahme der vorderen Prallteilwand die jeweils farbverkrusteten Flächen mit einem Spachtel behandelt und die Ablagerungen so abgetragen werden.

Der Erfindung liegt die Aufgabe zugrunde, bei einer Prallfläche, die insbesondere als Vorfilter für Spritznebel-Absauganlagen dient, eine automatische oder manuell ablaufende vereinfachte Reinigung insbesondere der insofern inneren Halbschalenflächen zu ermöglichen, ohne daß manuell eine einzelne Bearbeitung der Halbschalenflächen mit einem Schaber erforderlich ist.

Die Erfindung erreicht dieses Ziel mit den kennzeichnenden Merkmalen des Anspruchs 1 und hat den Vorteil, daß ohne größere Umstände und in einem Durchlauf eine wirksame Reinigung mindestens der inneren Halbschalenflächen, bevorzugt aber auch sämtliche dem Spritz- oder Farbnebel ausgesetzten Flächen des Vorfilters möglich ist.

Hierzu wird ein gleichzeitig sämtliche inneren und gegebenfalls auch äußeren Flächen reinigendes Kratzinstrument vertikal längs der sich halbschalenförmig öffnenden Kanäle von vorderer und hinterer Prallteilwand entlanggeführt, wobei entweder eine vollständig automatische Betätigung mit Hilfe eines geeigneten Antriebsmotors und entsprechenden Endschaltern oder auch eine Betätigung, also ein Verfahren des Kratzinstrumentes über einen Kurbeltrieb möglich ist.

Ein weiterer Vorteil vorliegender Erfindung besteht darin, daß die durch das Kratzinstrument oder Abtragwerkzeug von den farbverschmutzten Wänden gelösten Verunreinigungen problemlos nach unten fallen und in eine untere Schublade des Vorfilters gelangen, aus welcher sie dann ohne weiteres entfernt werden, so daß sich hierdurch auch der Vorteil einer häufigeren Reinigung ergibt, wodurch solche Vorfilter stets voll einsatzfähig sind und die Umwelt nicht unnötig belastet wird.

Vorteilhaft ist ferner, daß mit einem einzigen Abtragwerkzeug sämtliche relevanten Flächen des Prallflächen zur Verfügung stellenden Vorfilters gereinigt werden können, wobei das Kratzinstrument oder Abtragwerkzeug aus einer horizontalen Stange oder Strebe bzw. einem Träger besteht, der nach vorn und hinten, also zur vorderen und zur hinteren Prallteilwand gerichtet, Schabe- oder Kratzvorsprünge, üblicherweise in Form von die jeweilige U-Form in etwa bündig ausfüllenden Platten aufweist, die dann längs der farbverkrusteten Wandungen gleiten und diese durch Abstreifen der Verkrustungen reinigen.

Der horizontale Träger kann dabei mit einem durchlaufenden Kettentrieb verbunden sein, der von einer an beliebiger Stelle, vorzugsweise am oberen Ende des Vorfilters sitzenden Kurbel angetrieben wird, wobei auch ein Mutter/Spindelantrieb denkbar ist. Anstelle der Kurbel kann auch ein Antriebsmotor verwendet werden, der von einer geeigneten Elektronik und unter Verwendung von Endschaltern gesteuert ist.

Dabei ist die Reinigungseinrichtung für spritznebelbehaftete Prallflächen von Vorfiltern u.dgl. einfach und kostengünstig aufgebaut und kann zusammen mit dem Vorfilter, dem sie zugeordnet ist, problemlos an jede Stelle verbracht werden, wo durch Farbpartikel oder sonstige Verunreinigungen belastete Luft einer Reinigung, speziell einer Vorreinigung bedarf, bevor diese Luft Spritznebel-Absauganlagen oder ähnlichen Einrichtungen zugeführt wird.

Durch die in den abhängigen Ansprüchen aufgeführten Maßnahmen sind weitere vorteilhafte Ausgestaltungen und Verbesserungen der Erfindung möglich.

### Zeichnung

Ausführungsbeispiele der Erfindung sind in der Zeichnung dargestellt und werden in der nachfolgenden Beschreibung näher erläutert. Es zeigen:
- Fig. 1: eine Ansicht einer Prallfläche für Spritznebel-Absauganlagen in Form eines gestellartigen Vorfilters von vorn und
- Fig. 2: den gleichen Vorfilter wie in Fig. 1 in Seitenansicht, während die
- Fig. 3: einen Teilschnitt längs der Linie III-III der Fig. 1 und die
- Fig. 4: einen Schnitt längs der Linie IV-IV der Fig. 1 zeigt.

Der Grundgedanke vorliegender Erfindung besteht darin, bei einem Vorfilter mit labyrinthartig angeordneten Prallflächen eine einfache Reinigung der Farbverkrustungen oder sonstige Verunreinigungen tragenden Flächen durch ein im Aufbau einfaches Kratzwerkzeug zu ermöglichen, welches längs der jeweiligen Labyrinth-Halbkanäle mit Kratzvorsprüngen durch manuellen oder motorischen Antrieb eine Gleitverschiebung durchführt.

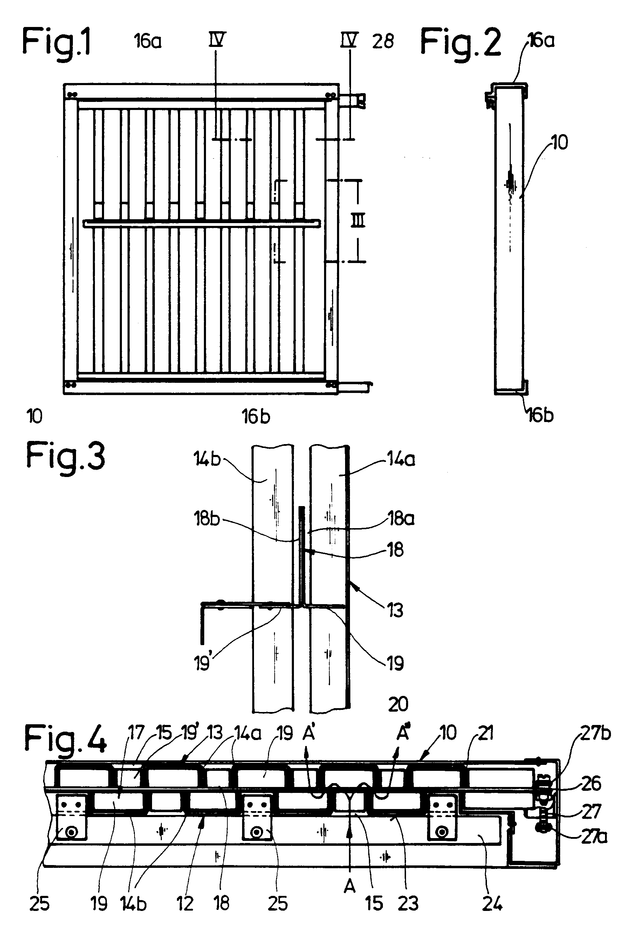

Der grundlegende, für sich gesehen bekannte Aufbau einer Prallfläche oder eines, beispielsweise aus einer vorderen Prallteilwand 12 und einer hinteren Prallteilwand 13 bestehenden Vorfilter 10 läßt sich am besten der Darstellung der Fig. 4 entnehmen. Jede Prallteilwand 12 bzw. 13, die zueinander ähnlich oder identisch sein können, besteht aus einer Reihe von parallel zueinander von oben nach unten verlaufenden U-förmigen Halbschalenflächen 14, die zwischen sich jeweils gleich große oder üblicherweise schmalere Zwischenräume 15 bilden. Die einzelnen Halbschalenflächen können aus entsprechenden Metallprofilen, üblicherweise beidseitig zur Gewinnung der U-Form abgekanteten Aluminiumplatten bestehen, die oben und unten, wie die Darstellung der Fig. 1 zeigt, durch Querträger 16a, 16b miteinander verbunden sind.

Dabei sind die beiden so gebildeten Prallteilwände 12 und 13 so gegeneinandergestellt, daß die einzelnen Halbschalenflächen 14 mit den offenen Flächen ihrer U-Form aufeinandergerichtet sind, also die jeweiligen Basisstege der U-Form nach außen gerichtet sind. Die Prallteilwände 12 und 13 sind zueinander in einem solchen Abstand angeordnet, daß zwischen ihnen in Querrichtung ein Schabe- oder Kratzwerkzeug bewegbar ist, worauf noch eingegangen wird.

Betrachtet man das Vorfilter der Fig. 4, dann erkennt man, daß die gegen die erste oder vordere Prallteilwand 12 anströmende Luft entsprechend dem Pfeil A längs der jeweiligen, von den Halbschalenflächen gebildeten Zwischenräume 15 in den Vorfilter einströmt, dann an der gegenüberliegenden offenen U-Formfläche der zweiten oder hinteren Prallteilwand - jeweils in Strömungsrichtung gesehen - abprallt, beidseitig nach links oder rechts ausweicht in die Halbschalenformen der vorderen Prallteilwand 12 und dann aus diesen nur den Weg weiter nach hinten in Strömungsrichtung entsprechend den Pfeilen A', A'' nehmen kann, also aus dem Vorfilter 10 durch die von der hinteren Prallteilwand gebildeten Zwischenräume 15 austritt.

Dieser bekannte Aufbau wird ergänzt durch die ein Kratz- oder Schabewerkzeug umfassende Reinigungseinrichtung 17, die aus einem quer verlaufenden Hauptträger 18 besteht, an den nach vorn und hinten in Strömungsrichtung gesehen mindestens die U-förmigen Halbschalenräume ausfüllend Kratzvorsprünge 19 angesetzt sind. Der Hauptträger 18 erstreckt sich dabei horizontal quer durch das gesamte Vorfilter 10 und ist beidseitig im Vorfilter so gelagert, daß er sich mit seinen Schabe- und Kratzvorsprüngen 19 vertikal von oben nach unten bzw. umgekehrt verschieben läßt. Dabei gleiten die Kratzvorsprünge 19 längs der Innenflächen der U-förmigen Halbschalen und reinigen diese von angelagerten (Farb)Verkrustungen.

Der weitere Aufbau läßt sich genauer der Darstellung der Fig. 3 entnehmen, die einen senkrechten Teilschnitt darstellt mit einer aufgeschnittenen U-förmigen Halbschalenfläche 14a der hinteren Prallteilwand 13 und der äußeren Seitenansicht des abgekanteten Schenkels einer U-förmigen Halbschalenfläche 14b der vorderen Prallteilwand 12. Zwischen den beiden aufeinander zugerichteten Schenkeln von vorderer und hinterer U-förmiger Halbschalenfläche verläuft in dem hinreichenden Zwischenraum 20 der Hauptträger 18 des Kratz- oder Schabewerkzeugs, bei dem dargestellten Ausführungsbeispiel bevorzugt bestehend aus den miteinander durch Schrauben, Verschweißen oder sonstwie verbundenen Hauptschenkeln 18a, 18b von L-förmig abgekanteten Metallängsplatten, vorzugsweise aus geeignetem Hartmessing, wobei die kürzeren Schenkel dann die jeweiligen eigentlichen Kratzelemente, also die Kratzvorsprünge 19 bilden, die bevorzugt so hergestellt sind, daß für die jeweiligen kürzeren Schenkel der U-förmigen Halbschalenflächen von vorderer und hinterer Prallteilwand in dem kürzeren Schenkel der L-Form der abgekanteten Metallängsplatten Einschnitte 21 vorgenommen sind.

In diesem Zusammenhang erweist es sich dann auch als eine vorteilhafte Ausgestaltung, nicht nur Kratzvorsprünge 19 in die U-förmigen Halbschalenflächen hineinragen zu lassen, sondern auch die Außenflächen der Halbschalenflächen gleich mit zu säubern, indem man in die Abstände oder Zwischenräume 15 zwischen den U-förmigen Halbschalenflächen weitere (schmalere) Kratzvorsprünge 19' hineinragen läßt, die sich ohne größere Umstände aufgrund der Einschnitte 21 aus den kürzeren Schenkeln der L-förmigen Metallausgangsplatten für das Kratzwerkzeug ergeben.

Hier kann man schließlich noch einen Schritt weitergehen und mindestens auch die Frontflächen 23 der vorderen Prallteilwand 12 gleich mitreinigen lassen, indem man an den nach vorne und insofern ins Freie weisenden (schmaleren) Kratzvorsprüngen 19', die primär die angrenzenden Seitenflächen der U-förmigen Halbschalen, flächen reinigen sollen, so, wie in Fig. 3 gezeigt, noch ein zusätzliches, sich über die gesamte Breite erstreckendes Kratz- oder Schabeblech 24 anbringt, beispielsweise mit Hilfe einiger Querlaschen 25, die mit Schraubennieten o.dgl. an beiden Teilen 19' und 24 befestigt sind.

Durch eine aufwärts- und abwärtsgerichtete Bewegung eines solchermaßen gebildeten und durch die feste Verbindung der abgekanteten Metallängsplatten auch einstückigen Kratzwerkzeugs 17 ist daher eine einwandfreie Reinigung sämtlicher, überhaupt spritznebelbelasteter Flächen möglich.

Zur vertikalen Verschiebung des Kratzwerkzeugs 17 können beliebige Antriebssysteme und Einrichtungen dienen - bevorzugt wird eine seitliche Anklemmung oder Befestigung beidseitiger Endbereiche 26 (Fig. 4) des Hauptträgers 18 an einem umlaufenden Kettentrieb 27, von dem man in Fig. 3 zwei der Kettenglieder 27a und 27b erkennen kann.

Die Befestigung der Endbereiche 26 des Hauptträgers 18 am Kettentrieb erfolgt dann an einem der Trums, in der Darstellung der Fig. 4 in Strömungsrichtung gesehen am hinteren Trum des Kettentriebs, wobei der Kettentrieb selbst oben und unten über entsprechende Zahnräder oder Ritzel läuft und beispielsweise und vorzugsweise oben das Ritzel mit einem Antriebswellenstummel 28 verbunden ist, in den beispielsweise eine Handkurbel (nicht dargestellt) eingeführt werden kann.

Es versteht sich, daß hier auch beliebige motorisch verfahrbare Antriebssysteme für die Reinigungsvorrichtung eingesetzt werden können, beispielsweise geschaltet durch eine Zeitsteuerung oder auch durch manuellle Betätigung von Startknöpfen, wobei das jeweilige Einfahren des Kratzwerkzeugs in die Endpositionen durch Endschalter gewährleistet sein kann.

Natürlich kann anstelle des Kettentriebs auch ein Motor/Spindeltrieb oder eine sonstige Antriebsart für die vertikale Verschiebung des Kratzwerkzeugs eingesetzt werden.

## Patentansprüche

1. Vorfilter (10) für Spritznebel-Absauganlagen mit Prallflächen (14), die ein Labyrinthsystem bilden, indem aus U-förmigen Halbschalenflächen (14a, 14b) aufgebaute Prallteilwände (12, 13) mit den offenen Flächen ihrer U-Formen gegeneinander angeordnet sind und somit eine Umlenkung des mit Farbpartikeln beladenen Luftstroms und eine gleichzeitige Anlagerung der Farbpartikel an den Wänden der Halbschalenflächen bewirken, dadurch gekennzeichnet, daß die beiden Prallteilwände (12, 13) unter Ausbildung eines Zwischenraums (20) aufeinander zu gerichtet angeordnet sind, und eine Reinigungseinrichtung (17) zum Ablösen von Farbverkrustungen oder -ablagerungen vorgesehen ist, die aus einem innerhalb des zwischen den beiden Prallteilwänden (12, 13) gebildeten Zwischenraums (20) und quer zu den Längsachsen der U-Halbschalenflächen (14) angeordneten, längs dieser U-Halbschalenflächen geführten Hauptträger (18) besteht, der mit mindestens die U-förmigen Halbschalenräume ausfüllenden Kratzvorsprüngen (19) versehen ist.

2. Vorfilter (10) nach Anspruch 1, dadurch gekennzeichnet, daß sich der Hauptträger horizontal über die Breite des Vorfilters (10) innerhalb des Zwischenraumes (20) erstreckt und vertikal nach oben und unten mittels Führungsmitteln an den Endbereichen (26) des Hauptträgers (18) verfahrbar ist.

3. Vorfilter (10) nach Anspruch 1 oder 2, dadurch gekennzeichnet, daß in die von den U-förmigen Halbschalenflächen (14a, 14b) von vorderer und hinterer Prallteilwand (12, 13) gebildeten Zwischenräume (15) weitere, seitliche Außenflächen der U-förmigen Halbschalenflächen (14a, 14b) reinigende Kratzvorsprünge (19') hineinreichen, die ebenfalls am Hauptträger (18) befestigt sind.

4. Vorfilter (10) nach Anspruch 3, dadurch gekennzeichnet, daß an den in den Zwischenräumen (15) angeordneten Kratzvorsprüngen (19') mindestens für die vordere Prallteilwand ein quer verlaufendes Kratz-Schabeblech (24) befestigt ist, welches auch die der anströmenden Luft zugewandten Vorderflächen (23) der U-förmigen Halbschalenflächen (14b) der vorderen Prallteilwand (12) reinigt.

5. Vorfilter (10) nach Anspruch 4, dadurch gekennzeichnet, daß das horizontal durchlaufende äußere Kratz-Schabeblech (24) über Laschen (25) an den Kratzvorsprüngen (19') befestigt ist.

6. Vorfilter (10) nach einem der Ansprüche 1 bis 5, dadurch gekennzeichnet, daß der Hauptträger (18) des Kratzwerkzeugs (17) aus mindestens einer zu einer L-Form abgekanteten Metallängsplatte besteht, deren kürzere Schenkel die Kratzvorsprünge (19, 19') bilden.

7. Vorfilter (10) nach Anspruch 6, dadurch gekennzeichnet, daß zwei der vorderen und der hinteren Prallteilwand (12, 13) zugeordnete, abgekantete, L-förmige Metallängsplatten vorgesehen sind, deren längere, miteinander verbundene Schenkel (18a, 18b) den Hauptträger (18) bilden, wobei die Kratzvorsprünge (19, 19') an den kürzeren Schenkeln durch Einschnitte (21) an diesen gebildet sind.

8. Vorfilter (10) nach einem der Ansprüche 1 bis 7, dadurch gekennzeichnet, daß die beidseitigen Führungen für den Hauptträger aus vertikalen Bewegungsanordnungen bestehen, die manuell oder automatisch angetrieben sind.

9. Vorfilter (10) nach einem der Ansprüche 1 bis 8, dadurch gekennzeichnet, daß beidseitig des Hauptträgers umlaufende Kettentriebe vorgesehen und im Gestell des Vorfilters (10) gelagert sind und Endbereiche (26) des Hauptträgers (18) des Kratzwerkzeugs an einem Trum des Kettentriebs befestigt sind, der oben und unten über Ritzel läuft und mindestens eines der Ritzel angetrieben ist.

10. Vorfilter (10) nach Anspruch 9, dadurch gekennzeichnet, daß das angetriebene Ritzel mit dem gegenüberliegenden Ritzel des anderen Kettentrums durch eine Mitnahmewelle verbunden ist.

11. Vorfilter (10) nach einem der Ansprüche 9 oder 10, dadurch gekennzeichnet, daß zum manuellen Antrieb des Kratzwerkzeugs (17) eine mit dem angetriebenen Ritzel verbundene Kurbel vorgesehen ist.

12. Vorfilter (10) nach einem der Ansprüche 9 oder 10, dadurch gekennzeichnet, daß zum Antrieb des Ritzels ein Motor (Elektromotor, hydraulischer Motor) vorgesehen ist.

13. Vorfilter nach einem der Ansprüche 1 bis 12, dadurch gekennzeichnet, daß unterhalb der Prallteilwände (12, 13) eine schubladenförmig ausgebildete, dem Vorfilter mindestens teilweise entnehmbare, durch die Reinigungsvorrichtung abgekratzte Farbverkrustungen aufnehmende Sammelschale gleitverschieblich angeordnet ist.

## Claims

1. A prefilter (10) for spray-mist suction systems having deflecting surfaces (14) forming a labyrinth system, wherein deflecting sub-walls (12, 13), formed by U-shaped half-shell surfaces (14a, 14b), are arranged with the open surfaces of their U-form facing each other and thus cause deflection of the air stream laden with paint particles and simultaneous accumulation of the paint particles on the walls of the half-shell surfaces, characterised in that the two deflecting sub-walls (12, 13) are arranged so as to face each other, forming an intermediate space (20), and a cleaning device (17) is provided for removing paint encrustations or deposits and comprises a main support (18) arranged inside the intermediate space (20), formed between the two deflecting sub-walls (12, 13), transversely to the longitudinal axes of the U-half-shell surfaces (14) and guided therealong, the main support (18) being provided with scraper projections (19) filling at least the U-shaped half-shell cavities.

2. A prefilter (10) according to claim 1, characterised in that the main support extends horizontally over the width of the prefilter (10) inside the intermediate space (20) and is movable up and down vertically by guide means on the end regions (26) of the main support (18).

3. A prefilter (10) according to claim 1 or 2, characterised in that scraper projections (19'), cleaning further, lateral outer surfaces of the U-shaped half-shell surfaces (14a, 14b), extend into the intermediate spaces (15) formed by the U-shaped half-shell surfaces (14a, 14b) of the front and rear deflecting sub-walls (12, 13) and are also fixed to the main support (18).

4. A prefilter (10) according to claim 3, characterised in that a transversely extending scraper-abrasion plate (24) is fixed to the scraper projections (19') arranged in the intermediate spaces (15), at least for the front deflecting sub-wall, and also cleans the front surfaces (23) of the U-shaped half-shell surfaces (14b) of the front deflecting sub-wall (12), the front surfaces (23) facing the inflowing air.

5. A prefilter (10) according to claim 4, characterised in that the horizontally extending, outer scraper-abrasion plate (24) is fixed to the scraper projections (19') by connecting strips (25).

6. A prefilter (10) according to one of claims 1 to 5, characterised in that the main support (18) of the scraping tool (17) comprises at least one longitudinal metal plate bent into an L-shape, the shorter arms thereof forming the scraper projections (19, 19').

7. A prefilter (10) according to claim 6, characterised in that two bent, L-shaped longitudinal metal plates are provided, the longer, interconnected arms (18a, 18b) thereof forming the main support (18), the scraper projections (19, 19') on the shorter arms being formed by indentations (21) therein, the longitudinal metal plates being associated with the front and rear deflecting sub-walls (12, 13).

8. A prefilter (10) according to one of claims 1 to 7, characterised in that the guides, at both ends, for the main support comprise vertical motion arrangements driven manually or automatically.

9. A prefilter (10) according to one of claims 1 to 8, characterised in that chain drives, rotating at both ends of the main support, are provided and are mounted in the frame of the prefilter (10) and end regions (26) of the main support (18) of the scraping tool are fixed to a strand of the chain drive which travels up and down by means of pinions and is driven by at least one of the pinions.

10. A prefilter (10) according to claim 9, characterised in that the driven pinion is connected to the opposite pinion of the other chain strand by a drive shaft.

11. A prefilter (10) according to one of claims 9 and 10, characterised in that a crank, connected to the driven pinion, is provided for manually operating the scraping tool (17).

12. A prefilter (10) according to one of claims 9 and 10, characterised in that a motor (electric motor, hydraulic motor) is provided for driving the pinion.

13. A prefilter according to one of claims 1 to 12, characterised in that a collecting dish, formed in the manner of a drawer, at least partly removable from the prefilter and containing paint encrustations scraped off by the cleaning device, is arranged below the deflecting sub-walls (12, 13) in a slidingly displaceable manner.

## Revendications

1. Préfiltre (10) pour des installations d'aspiration d'un brouillard de peinture pulvérisé avec des surfaces d'impact (14), qui constituent un système en labyrinthe, en disposant des parois partielles de choc (12, 13) construites à partir de surfaces de demi-coque en forme de U (14a, 14b) avec les faces ouvertes de leurs formes en U l'une contre l'autre et en créant ainsi une déviation du courant d'air chargé de particules de peinture et un dépôt simultané des particules de couleur sur les parois des surfaces en demi-coque, caractérisé en ce que les deux parois partielles de choc (12, 13) sont disposées dirigées l'une vers l'autre en formant un espace intermédiaire (20), et un dispositif de nettoyage (17) est prévu pour détacher les incrustations de peinture ou les dépôts de peinture, dispositif qui se compose d'un support principal (18) disposé à l'intérieur de l'espace intermédiaire (20) formé entre les deux parois partielles d'impact (12, 13) et transversalement aux axes longitudinaux des surfaces de demi-coque en U (14) guidé le long de ses surfaces en demi-coque en U, support principal qui est muni de parties en saillie de raclage (19) remplissant au moins les espaces de demi-coque en forme de U.

2. Préfiltre (10) selon la revendication 1, caractérisé en ce que le support principal s'étend horizontalement sur la largeur du préfiltre (10) à l'intérieur de l'espace intermédiaire (20) et verticalement vers le haut et vers le bas, il peut se déplacer à l'aide de moyens de guidage aux deux extrémités (26) du support principal (18).

3. Préfiltre (10) selon les revendications 1 ou 2, caractérisé en ce que dans les autres surfaces latérales extérieures des surfaces de demi-coque en forme de U (14a, 14b) à partir des surfaces de demi-coque en forme de U (14a, 14b) des espaces intermédiaires (15) formés par la paroi partielle de choc avant et arrière (12, 13) s'étendent des pièces en saillie de raclage (19') pour le nettoyage, qui sont également fixées sur le support principal (18).

4. Préfiltre (10) selon la revendication 3, caractérisé en ce qu'une tôle de raclage (24) se développant transversalement est fixée aux pièces de saillie de raclage (19') placées dans les espaces intermédiaires (15) au moins pour la paroi partielle de choc avant, tôle de raclage qui nettoie aussi les surfaces avant (23) tournées vers l'air affluant des faces de semi-coquille en forme de U (14b) de la paroi partielle de choc avant (12).

5. Préfiltre (10) selon la revendication 4, caractérisé en ce que la tôle de raclage extérieure (24) se déplacant horizontalement est fixée par des éclisses aux pièces en saillie de raclage (19').

6. Préfiltre (10) selon une des revendications 1 à 5, caractérisé en ce que le support principal (18) de l'outil de raclage (17) se compose d'au moins une plaque longitudinale de métal pliée en forme d'un L, dont les branches les plus courtes forment les pièces en saillie de grattage (19, 19').

7. Préfiltre (10) selon la revendication 6, caractérisé en ce que deux des plaques longitudinales de métal associées à la paroi partielle de choc (12, 13), repliées en forme de L sont prévues, dont leurs branches les plus longues reliées entre elles (18a, 18b) forment le support principal (18), tandis que les pièces en saillie de raclage (19, 19') sont formées sur les branches les plus courtes par des entailles sur celles-ci.

8. Préfiltre (10) selon une des revendications 1 à 7, caractérisé en ce que les guides des deux côtés du support principal sont constitués de dispositifs de déplacement verticaux qui sont commandés manuellement ou automatiquement.

9. Préfiltre (10) selon une des revendications 1 à 8, caractérisé en ce que des deux côtés du support principal des transmissions par chaîne tournantes sont prévues et sont logées dans le châssis du préfiltre (10) et des zones d'extrémités (26) du support principal (18) de l'outil de raclage sont fixées à un compartiment de la transmission par chaîne, qui tourne en haut et en dessous et en bas sur des pignons et au moins un des pignons est commandé.

10. Préfiltre (10) selon la revendication 9, caractérisé en ce que le pignon moteur est relié avec le pignon opposé de l'autre compartiment de chaîne par un arbre d'entraînement.

11. Préfiltre (10) selon une des revendications 9 ou 10, caractérisé en ce que pour la commande manuelle de l'outil de raclage (17) est prévue une manivelle, reliée au pignon commandé.

12. Préfiltre (10) selon une des revendications 9 ou 10, caractérisé en ce que pour l'entraînement du pignon, est prévu un moteur (moteur électrique, moteur hydraulique).

13. Préfiltre (10) selon une des revendications 1 à 12, caractérisé en ce que en dessous des parois partielles de choc (12, 13) est disposée déplaçable par glissement une coque de collecte, réalisée sous forme de tiroir, pouvant être extraite au moins partiellement du préfiltre et recevant , grâce au dispositif de nettoyage, des incrustations de peinture.
